# EUROPÄISCHE PATENTSCHRIFT

(11) **EP 3 536 528 B1**
(45) Veröffentlichungstag und Bekanntmachung des Hinweises auf die Patenterteilung: **25.11.2020**
(21) Anmeldenummer: 19156876.5
(22) Anmeldetag: 13.02.2019
(51) Int. Cl.: B60J 7/20

(54) **CABRIOLET-FAHRZEUG**
CONVERTIBLE VEHICLE
VÉHICULE CABRIOLET

(30) Priorität: 08.03.2018 DE 102018203536
(43) Veröffentlichungstag der Anmeldung: 11.09.2019
(73) Patentinhaber: Magna Car Top Systems GmbH, 74321 Bietigheim-Bissingen (DE)
(72) Erfinder: SCHUMACHER, Thorsten, 25495 Kummerfeld (DE)
(74) Vertreter: Völger, Silke Beatrix

(56) Entgegenhaltungen:
- EP-A1- 0 846 584
- DE-A1-102006 052 073
- US-A1- 2010 066 117
- US-A1- 2011 095 560

## Beschreibung

Die Erfindung betrifft ein Cabriolet-Fahrzeug mit einem karosserieseitig angeordneten Aufbau umfassend einen Verdeckkasten mit Verdeckkastendeckel und einem Faltverdeck, welches von einer Schließstellung in eine Offenstellung und umgekehrt verstellbar ist, und wobei zwischen Aufbau und Verdeckkastendeckel eine Verdeckkastendeckelkinematik angeordnet ist, über die eine Verstellbewegung des Verdeckkastendeckels zur Aufnahme des Faltverdecks in dem Verdeckkasten ausführbar ist, und wobei zwischen Aufbau und Verdeckkastendeckel eine Zentriereinrichtung vorgesehen ist.

Aus der US 2010/066117 A1 ist ein Cabriolet Fahrzeug mit einem über eine Viergelenkanordnung zwischen einer Schließstellung und einer Offenstellung verschwenkbar gelagerten Verdeckkastendeckel bekannt. Zur seitlichen Führung des Verdeckkastendeckels in Querrichtung des Fahrzeugs ist an einem vorderen Ausstellhebel seitlich ein Anlaufkeil angeordnet, der einer Anlauffläche am Lagerbock in der Schließstellung gegenübersteht.

Aus der DE 195 25 587 C1 ist ein Cabriolet Fahrzeug mit einem Verdeckkastendeckel für einen heckseitig in einem Aufbau eines Personenkraftwagens angeordneten Verdeckkasten bekannt, der zur Aufnahme eines Verdecks ausgebildet ist. Der Verdecckastendeckel ist über Scharniere an dem Aufbau angelenkt und mittels einer motorischen Antriebsvorrichtung von einer Schließstellung in eine Offenstellung bewegbar. Und der Verdeckkastendeckel wird einerseits durch eine selbsthemmende Ausbildung eines Schneckengetriebes und andererseits durch zumindest eine formschlüssige Arretiereinrichtung in der Schließstellung gehalten. Durch die Arretiereinrichtung wird der Verdeckkastendeckel relativ zum angrenzenden Aufbau zentriert und in Y- und Z Richtung festgelegt.

Aus der DE 10 2004 038 433 A1 geht ein Verdeckkastendeckel für Kraftfahrzeuge hervor, der einem Aufnahmeraum zur Unterbringung eines geöffneten Klappverdecks zugeordnet und zwischen einer Schließstellung und einer Offenstellung verlagerbar ist. An der Unterseite des Verdeckkastendeckels ist ein Niederhalter angebracht, der mit einem Zentrierelement des im Aufnahmeraum untergebrachten Faltverdecks zusammenwirkt. Der Niederhalter umfasst eine Anlaufbahn und eine Stützbahn.

Des Weiteren ist aus der DE 10 2010 010 067 A1 ein Cabriolet-Fahrzeug mit einem karosserieseitig angeordneten Aufbau umfassend einen Verdeckkasten mit Verdecckastendeckel und einem Faltverdeck, welches von einer Schließstellung in eine Offenstellung und umgekehrt verstellbar ist, bekannt. Um diesen Verdeckkastendeckel zu optimieren ist zwischen Aufbau und Verdeckkastendeckel eine im Wesentlichen in Fahrzeugquerrichtung wirksame Zentriereinrichtung vorgesehen, die Stützglieder am Aufbau und Steuerelemente am Verdeckkastendeckel umfasst.

Aufgabe der Erfindung ist es, ein Cabriolet Fahrzeug mit einem Aufbau umfassend einen Verdeckkasten mit Verdeckkastendeckel und einem Faltverdeck derart weiterzubilden, dass eine zwischen Verdeckkastendeckel und Aufbau angeordnete Zentrierungseinrichtung sich durch eine zuverlässige Funktion und leichte Realisierbarkeit auszeichnet, wobei eine hohe Systemquersteifigkeit erreicht werden soll.

Diese Aufgabe wird durch die Merkmale des Patentanspruchs 1 gelöst.

Die mit der Erfindung hauptsächlich erzielten Vorteile sind darin zu sehen, dass die Zentrierungseinrichtung zwischen Verdeckkastendeckel und Aufbau bzw. Verdeckkasten einen vorbildlichen Betrieb sichert, wenn der Verdeckkastendeckel von der Offenstellung in die Schließstellung verlagert wird und dabei nicht nur in Fahrzeughöhenrichtung, sondern auch in Fahrzeuglängsrichtung bewegt wird. Dies wird dadurch erreicht, dass die Zentrierungseinrichtung vor allem in Fahrzeugquerrichtung wirksam ist und durch jeweils an Längsseiten des Aufbaus bzw. der Verdeckkastendeckelkinematik angebrachte Stützglieder und Gleitelemente gebildet wird. Eine funktionsgerechte Konstruktion der Zentrierungseinrichtung wird dadurch erreicht, dass auf jeder Fahrzeuglängsseite zwei Paar zusammenwirkende Stützglieder / Gleitelemente vorgesehen sind. Die an Lenkern der Verdeckkastendeckelkinematik angeordneten Gleitelemente kommen bei der Verstellbewegung mit den Stützgliedern die am Aufbau im Bereich des Hauptlagers angeordnet sind, in den verschiedenen Phasen der Bewegung in Fahrzeugquerrichtung gleitend miteinander in Berührung. Durch die erfindungsgemäße Anordnung der Gleitelemente an der Verdeckkastendeckelkinematik bzw. an entsprechenden Lenkern wird bei der Verstellbewegung frühzeitig eine Verblockung der Lenker über die Gleitelemente an den zugeordneten Stützelementen erreicht, wodurch eine Versteifung der Verdeckkastendeckelanordnung erfolgt. Die Verdeckastendeckelkinematik bzw. die zugeordneten Lenker können hierdurch in einer schlankeren, weicheren und leichteren Bauweise ausgeführt werden, um den Querkrafteinflüssen zu widerstehen.

Ein weiterer Vorteil der Integration der Gleitelemente in die Verdeckkastendeckelkinematik und die Anordnung der zugeordneten Stützelemente an mit dem Hauptlager verbundenen Strukturabschnitt besteht darin, dass eine Einstellung bzw. Justierung der Zentriereinrichtung in dem separaten Modul "Verdeckastendeckelkinematik" ausgeführt werden kann.

In einer bevorzugten Ausführungsform der Erfindung sind die Stützglieder mit einer keilförmigen Anlaufbahn ausgeführt. Hiedurch lässt sich eine Fangfunktion erreichen. Des Weiteren weisen die Stützglieder eine Stützbahn auf. Die korrespondierenden Gleitelemente weisen ebenfalls eine parallele Fläche auf, wodurch bei Anlage der Stützbahn und der Gleitelemente eine Verblockung und somit eine Kraftübertragung in Querrichtung des Fahrzeugs möglich ist.

Es wird eine hohe Systemquersteifigkeit erreicht.

Vorteilhafte Ausgestaltungen der vorliegenden Erfindung sind in den Unteransprüchen angegeben.

Die Erfindung wird nachfolgend anhand in den Zeichnungen schematisch dargestellter Ausführungsbeispiele beschrieben.

Es zeigt:

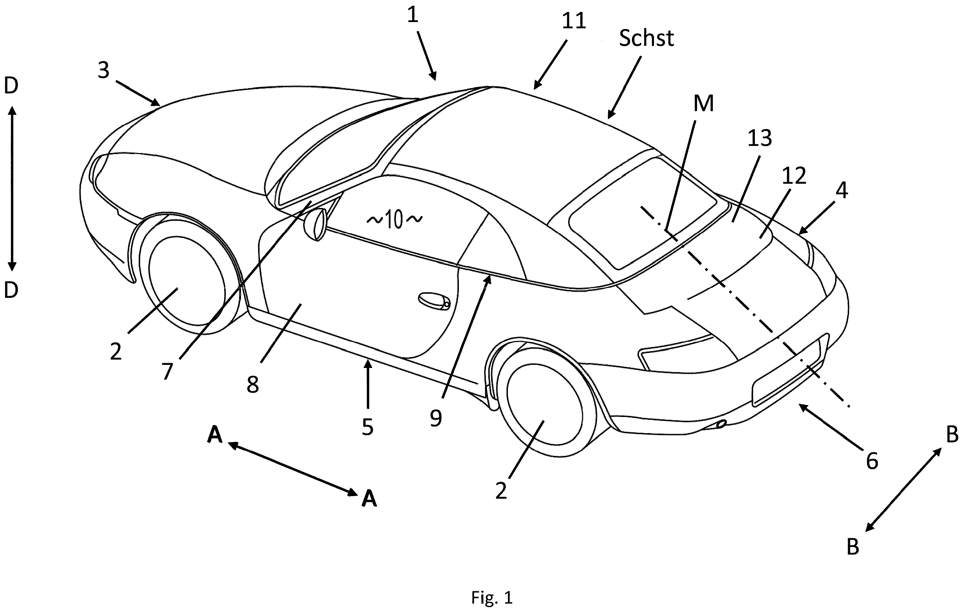

Fig. 1 eine schematische Schrägansicht von hinten links oben auf ein Cabriolet Fahrzeug mit Faltverdeck; und
Fig. 2 eine Seitenansicht einer Verdeckkastendeckelkinematik mit erfindungsgemäßer Zentriereinrichtung in unterschiedlichen Positionen bei der Verstellbewegung eines Verdeckkastendeckels zwischen einer Ablagestellung und einer hochverlagerten Stellung.

Ein Personenkraftwagen 1 weist einen von Rädern 2 getragenen Aufbau 4 auf, der einen Grundkörper 5 mit einem Bug 3, einem Heck 6, einem Windschutzscheibenrahmen 7 und Seitentüren 8 umfasst. Der Grundkörper 5 wird bereichsweise von einer Gürtellinie 9 begrenzt, wobei oberhalb der Gürtellinie 9 ein Faltverdeck 11 vorgesehen ist, das zwischen einer einen Fahrgastraum 10 überspannenden Schließstellung Schst in eine in einem Verdeckkasten 12 abgelegte Offenstellung verstellbar ist. Der fest mit dem Aufbau 4 verbundene Verdeckkasten 12 wird von einem Verdeckkastendeckel 13 abgedeckt.

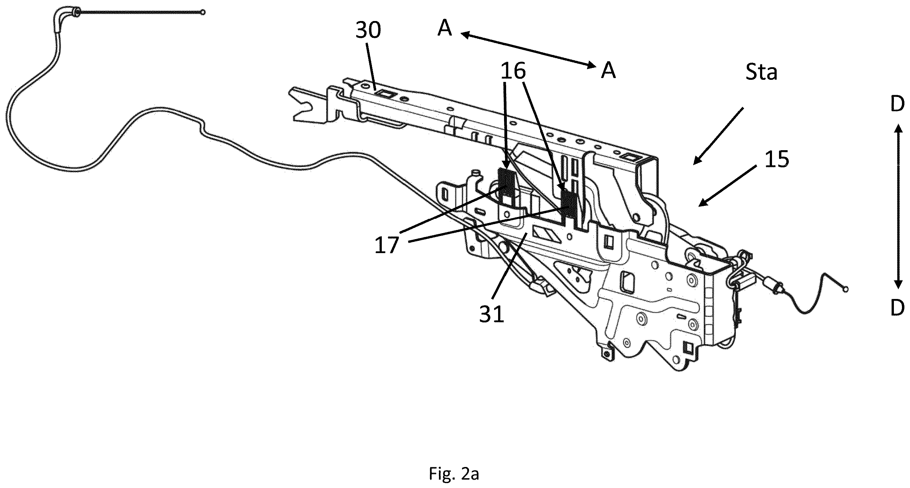

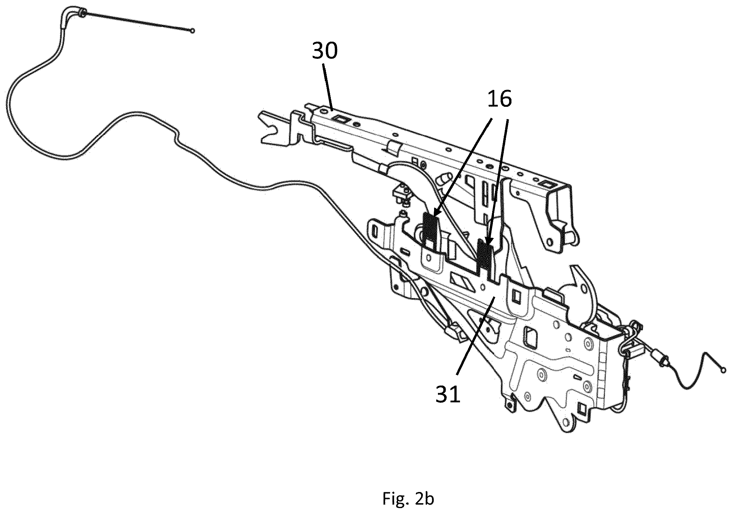

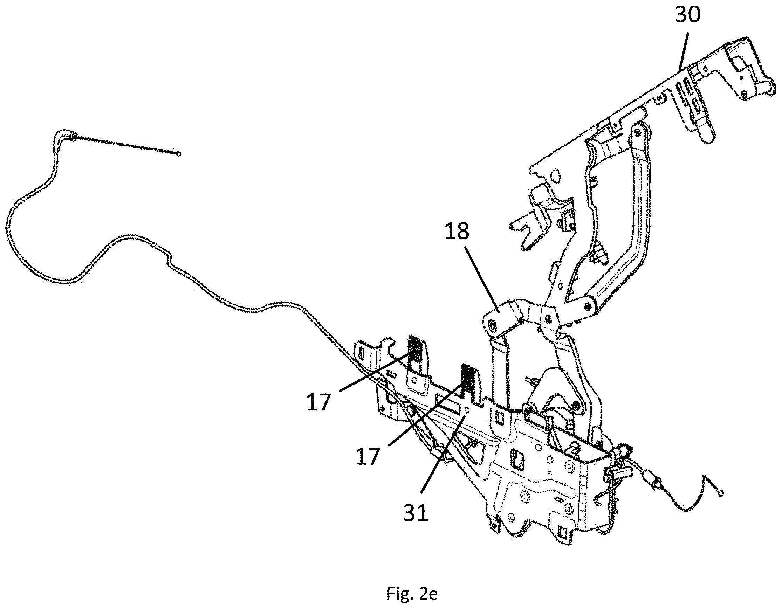

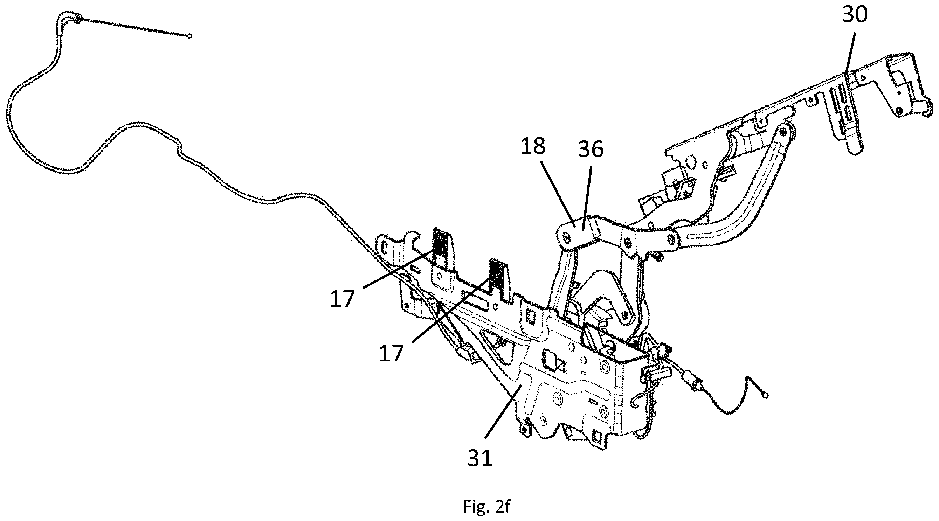

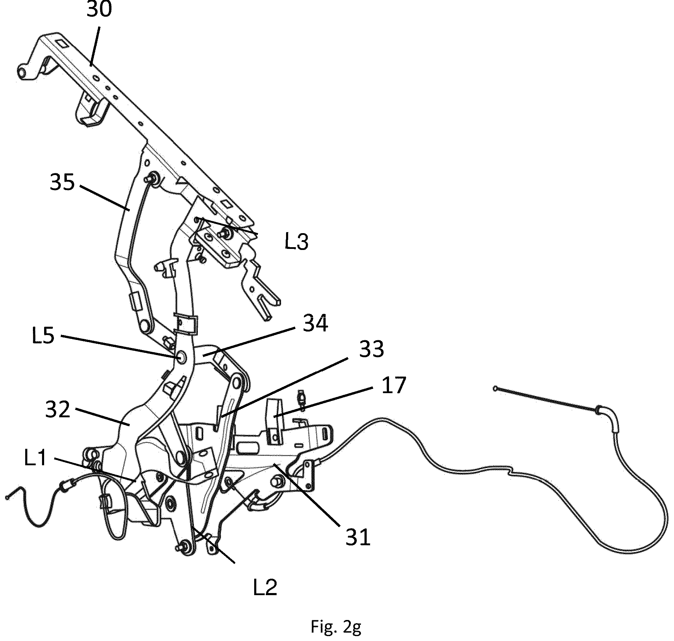

Der Verdeckkastendeckel 13 ist bei der Verstellbewegung des Faltverdecks von der Schließstellung in die Offenstellung und vice versa zwecks Aufnahme des Faltverdecks 11 in dem Aufnahmeraum des Verdeckkastens 12 unter Zwischenschaltung einer Verdeckkastendeckelkinematik 15 von einer abgesenkten Stellung Sta unter Durchlaufen einer Zwischenstellung Stz in eine hochverlagerte Stellung Sth bewegbar ist und vice versa. Diese Verstellbewegung des Verdeckkastendeckels 13 ist in den Figuren 2a-2g gezeigt. Die Figur 2a zeigt dabei die abgesenkte Stellung, bei der der Verdeckkastendeckel 13 den Verdeckkasten 12 abdeckt. Figur 2g zeigt die hochverlagerte Stellung des Verdeckkastendeckels 13. Bei der Verstellung des Verdeckkastendeckels 14 zwischen abgesenkter Stellung Sta und hochverlagerter Stellung Sth übt der Verdeckkastendeckel 13 eine translatorische Bewegung in Fahrzuglängsrichtung A-A aus.

An dieser Stelle sei angemerkt, dass sich die nachfolgende Beschreibung der Verdeckkastendeckelkinematik 15 und der Zentriereinrichtung 16 nur auf eine Seite des Cabriolet Fahrzeugs bezieht. Die Verdeckkastendeckelkinematik 15 sowie die Zentriereinrichtung 16 sind jeweils spiegelsymmetrisch zu einer Mittellängsebene M angeordnet.

Die Verdeckkastendeckelkinematik 15 ist als Mehrgelemnk-Kinematikanordnung ausgeführt, die eine Anzahl Lenker und zugeordnete Lagerstellen umfasst. In einer bevorzugten Ausführungsform kann eine Siebengelenk-Kinematikanordnung vorgesehen sein. Die Kinematikanordnung ist zwischen Verdeckkastendeckel 13 bzw. an einem mit dem Verdeckkastendeckel verbundenen Strukturabschnitt 30 und dem Aufbau 4 bzw. einem mit dem Aufbau 4 verbundenen Strukturabschnitt 31 angeordnet. Der Strukturabschnitt 31 umfasst ein Hauptlager der Kinematikanordnung. Ein erster Lenker 32 ist über einen ersten Endbereich an einer Lagerstelle L1 angebunden. Ein zweiter Lenker 33 ist über einen ersten Endbereich an einer Lagerstelle L2 an dem Strukturabschnitt 31 angebunden. Der erste Lenker 32 ist über seinen zweiten Endbereich über eine Lagerstelle L3 an dem Strukturabschnitt 30 angebunden. Der zweite Lenker 33 ist über eine Anzahl weiterer Lenker 34, 35 über eine Lagerstelle L4 an dem Strukturabschnitt 30 angebunden. Lenker 32 ist in etwa mittig mit dem Lenker 34 über eine Lagerstelle L5 miteinander drehbar gekoppelt.

Zwischen Verdeckkastendeckel 13 und Aufbau 4 ist eine Zentriereinrichtung 16 wirksam, die hauptsächlich in Fahrzeugquerrichtung B-B wirksam ist und dafür sorgt, dass der Verdeckkastendeckel 14 in der abgesenkten Stellung Sta lagerichtig zum Aufbau 4 ausgerichtet ist. Die Zentriereinrichtung 16 ist benachbart von einer Längsseite des Aufbaus 4 des Personenkraftwagens 1 mit zwei Stützgliedern 17 und zugeordneten Gleitelementen 18 versehen. Hiervon sind die Stützglieder 17 am Aufbau 4 und die Gleitelemente 18 an Lenkerelementen der Verdeckkastendeckelkinematik 15 angeordnet. Die Stützglieder 17 sind parallel beabstandet in der Fahrzeuglängsrichtung A-A an dem Strukturelement 31 im Bereich des Hauptlagers angeordnet. Das erste Gleitelement 18 ist an dem ersten Lenker 32 im Bereich oberhalb der Lagerstelle L5 angeordnet. Das zweite Gleitelement 18 ist an dem Lenker 34 unterhalb der Lagerstelle L5 angebunden.

An jedem Stützglied 17 sind in Fahrzeughöhenrichtung D-D betrachtet eine obere Anlaufbahn 19 und eine untere Stützbahn 20 angebracht, die zur Mittellängsebene M hin weisen. Die Anlaufbahn 19 der Stützglieder 17 ist keilförmig ausgebildet, das heißt sie erweitert sich als Schräge 21 von unten nach oben bzw. in Fahrzeughöhenrichtung D-D. Dagegen verläuft die Stützbahn 20 der Stützglieder 17 aufrecht und im Wesentlichen parallel zueinander. Wie bereits obenstehend genannt, sind die Stützglieder 17 an dem Strukturabschnitt 31 des Aufbaus 4 vorgesehen, wobei der Strukturabschnitt 30 im Ausführungsbeispiel integraler Bestandteil der Verdeckkastendeckelkinematik ist.

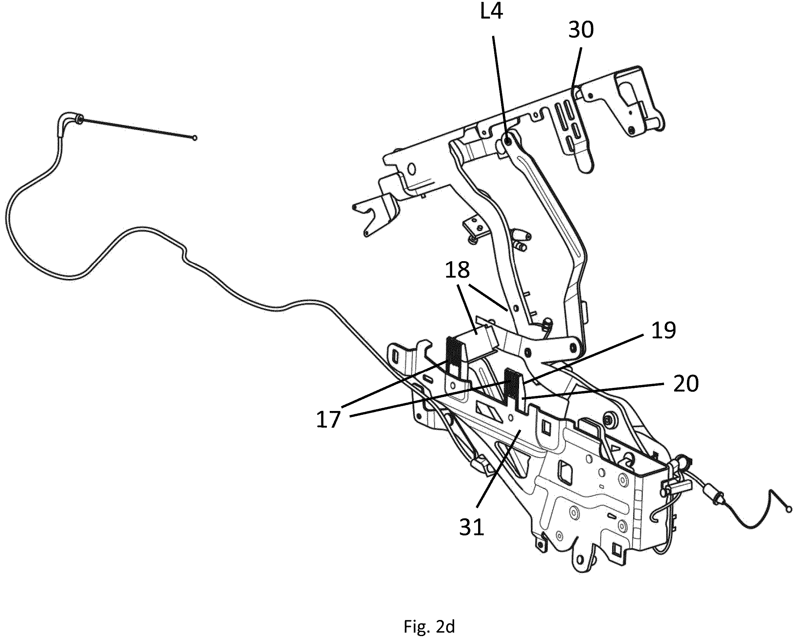

Die Gleitelemente 18 umfassen einen Zentrierabschnitt 36. In der Ablagestellung, die in der Figur 2a gezeigt ist, liegen jeweils ein Gleitelement 18 mittels des Zentrierabschnitts und ein Stützglied 17 über die Stützbahn aneinander an. Bei der Verstellbewegung ausgehend von der hochverlagerten Position des Verdeckkastendeckels dargestellt in Figur 2g in die Ablagestellung laufen die Gleitelemente 18 mittels des Zentrierabschnitts 36 auf die korrespondierenden schrägen Anlaufbahnen 19 des zugeordneten Stützgliedes 17 auf (Figur 2d) und stützen sich in der Endposition (Figur 2a) in Querrichtung gegeneinander ab.

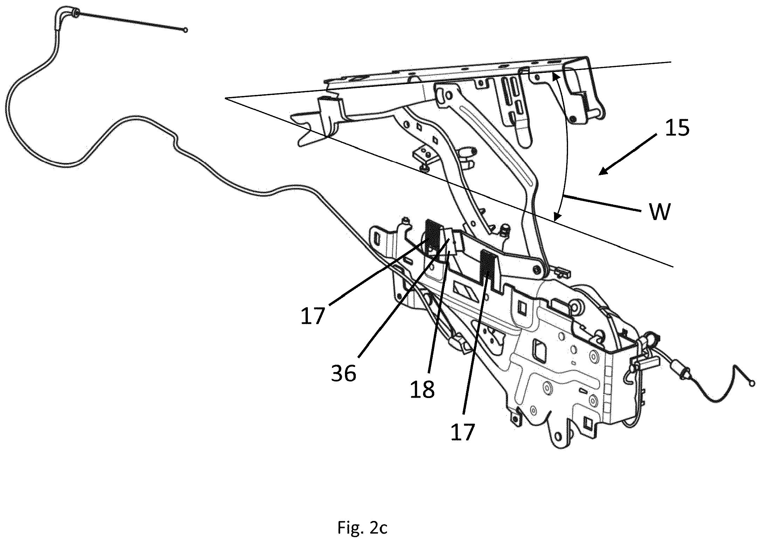

Wie es aus der Figur 2c die eine Zwischenstellung zeigt, ersichtlich ist, findet bereits in dieser Position eine frühzeitige "Verblockung" von Kinematikelementen statt. Bereits in dieser Position, in der der Verdeckkastendeckel noch um einen Winkel W hochgeschwenkt ist, liegen die Gleitelemente 18 an den Stützgliedern 17 an.

## Patentansprüche

1. Cabriolet-Fahrzeug mit einem karosserieseitig angeordneten Aufbau (4) umfassend einen Verdeckkasten (12) mit Verdeckkastendeckel (13) und einem Faltverdeck (11), welches von einer Schließstellung in eine Offenstellung und umgekehrt verstellbar ist, und wobei zwischen Aufbau(4) und Verdeckkastendeckel (13) eine Verdeckkastendeckelkinematik (15) angeordnet ist, über die eine Verstellbewegung des Verdeckkastendeckels (13) zur Aufnahme des Faltverdecks (11) in dem Verdeckkasten (12) ausführbar ist, wobei die Verdeckkastendeckelkinematik als Mehrgelenk-Kinematikanordnung ausgebildet ist, und wobei zwischen Aufbau (4) und Verdeckkastendeckel (13) eine Zentriereinrichtung (16) vorgesehen ist, die Stützglieder (17) am Aufbau und Gleitelemente (18) umfasst, wobei die Zentriereinrichtung (16) im Wesentlichen in Fahrzeugquerrichtung (B-B) wirksam ist und benachbart von Längsseiten des Aufbaus (4) vorgesehen ist, **dadurch gekennzeichnet, dass** die Mehrgelenk-Kinematikanordnung als Siebengelenk-Kinematikanordnung ausgebildet ist, wobei ein erster Lenker (32) über einen ersten Endbereich an einer Lagerstelle (L1) angebunden ist, und wobei ein zweiter Lenker (33) über einen ersten Endbereich an einer Lagerstelle (L2) an einem mit dem Aufbau (4) verbundenen Strukturabschnitt (31) angebunden ist, und wobei der erste Lenker (32) über seinen zweiten Endbereich über eine Lagerstelle (L3) an einem mit dem Verdeckkastendeckel (13) verbundenen Strukturabschnitt (30) angebunden ist, und wobei der zweite Lenker (33) über eine Anzahl weiterer Lenker (34, 35) über eine Lagerstelle (L4) an dem Strukturabschnitt (30) angebunden ist, und wobei der Lenker (32) in etwa mittig über eine Lagerstelle (L5) mit dem Lenker (34) drehbar gekoppelt ist, und dass die Zentriereinrichtung (16) jeweils zwei Stützglieder (17) und zwei Gleitelemente (18) umfasst, die paarweise zusammenwirken, und dass die Stützglieder (17) parallel beabstandet in der Fahrzeuglängsrichtung A-A an dem Strukturelement (31) im Bereich des Hauptlagers am Aufbau (4) angeordnet sind, und dass das erste Gleitelement (18) an dem ersten Lenker (32) im Bereich oberhalb der Lagerstelle (L5) angebunden ist, und dass das zweite Gleitelement (18) an dem Lenker (34) unterhalb der Lagerstelle (L5) angebunden ist.

2. Cabriolet-Fahrzeug nach Anspruch 1, **dadurch gekennzeichnet, dass** die Stützglieder Anlaufbahnen (19) und Stützbahnen (20) aufweisen, wobei die Anlaufbahnen (19) keilförmig von unten nach oben sich erweiternd ausgeführt sind, wogegen die Stützbahnen (20) senkrecht in Fahrzeughöhenrichtung D-D verlaufen.

## Claims

1. Convertible vehicle having a body (4) arranged on the bodywork side, comprising a convertible-top compartment (12) having a convertible-top-compartment lid (13) and a folding top (11) which is movable from a closed position into an open position, and vice versa, and wherein a convertible-top-compartment-lid kinematic system (15) is arranged between the body (4) and the convertible-top-compartment lid (13) and enables a movement of the convertible-top-compartment lid (13) to be carried out in order to accommodate the folding top (11) in the convertible-top compartment (12), wherein the convertible-top-compartment-lid kinematic system is in the form of a multi-bar-linkage kinematic arrangement, and wherein a centring device (16) is provided between the body (4) and the convertible-top-compartment lid (13), the centring device comprising supporting members (17) on the body and sliding elements (18), wherein the centring device (16) is effective substantially in the transverse direction (B-B) of the vehicle and is provided adjacent to longitudinal sides of the body (4), **characterized in that** the multi-bar-linkage kinematic arrangement is in the form of a seven-bar-linkage kinematic arrangement, wherein a first link (32) is connected via a first end region to a bearing point (L1), and wherein a second link (33) is connected via a first end region at a bearing point (L2) to a structural section (31) connected to the body (4), and wherein the first link (32) is connected via its second end region via a bearing point (L3) to a structural section (30) connected to the convertible-top-compartment lid (13), and wherein the second link (33) is connected via a number of further links (34, 35) via a bearing point (L4) to the structural section (30), and wherein the link (32) is coupled rotatably approximately centrally via a bearing point (L5) to the link (34), and **in that** the centring device (16) in each case comprises two supporting members (17) and two sliding elements (18) which interact in pairs, and **in that** the supporting members (17) are arranged spaced apart and parallel in the longitudinal direction A-A of the vehicle on the structural element (31) in the region of the main bearing on the body (4), and **in that** the first sliding element (18) is connected to the first link (32) in the region above the bearing point (L5), and **in that** the second sliding element (18) is connected to the link (34), below the bearing point (L5).

2. Convertible vehicle according to Claim 1, **characterized in that** the supporting members have run-on tracks (19) and supporting tracks (20), wherein the run-on tracks (19) are designed in a wedge-shaped manner expanding from the bottom upwards, whereas the supporting tracks (20) run perpendicularly in the vertical direction D-D of the vehicle.

## Revendications

1. Véhicule cabriolet doté d'un châssis (4) disposé côté carrosserie, comprenant un caisson à capote (12) doté d'un couvercle de caisson à capote (13) et d'une capote pliante (11) qui peut être déplacée d'une position de fermeture vers une position d'ouverture et vice versa, et dans lequel un dispositif cinématique de couvercle de caisson à capote (15) est disposé entre le châssis (4) et le couvercle de caisson à capote (13) qui permet d'effectuer un mouvement de déplacement du couvercle de caisson à capote (13) pour recevoir la capote pliante (11) dans le caisson à capote (12), le dispositif cinématique de caisson à capote étant réalisé sous la forme d'un ensemble cinématique à plusieurs articulations, et dans lequel un dispositif de centrage (16) est prévu entre le châssis (4) et le couvercle de caisson à capote (13) qui comprend des éléments d'appui (17) sur le châssis et des éléments coulissants (18), le dispositif de centrage (16) agissant substantiellement dans la direction transversale de véhicule (B-B) et étant prévu de manière adjacente aux côtés longitudinaux du châssis (4), **caractérisé en ce que** l'ensemble cinématique à plusieurs articulations est réalisé sous la forme d'un ensemble cinématique à sept articulations, dans lequel une première bielle (32) est attachée en un point d'appui (L1) par l'intermédiaire d'une première zone d'extrémité, et dans lequel une deuxième bielle (33) est attachée en un point d'appui (L2) par l'intermédiaire d'une première zone d'extrémité dans une partie structurelle (31) reliée au châssis (4), et la première bielle (32) étant attachée par l'intermédiaire de sa deuxième zone d'extrémité en passant par un point d'appui (L3) à une partie structurelle (30) reliée au couvercle de caisson à capote (13), et la deuxième bielle (33) étant attachée par d'un certain nombre de bielles supplémentaires (34, 35) en passant par un point d'appui (L4) à la partie structurelle (30), et dans lequel la bielle (32) est couplée en rotation à la bielle (34) de manière approximativement centrée en passant par un point d'appui (L5), et **en ce que** le dispositif de centrage (16) comprend respectivement deux éléments d'appui (17) et deux éléments coulissants (18) qui coopèrent par paires, et **en ce que** les éléments d'appui (17) sont disposés de manière espacée en parallèle dans la direction longitudinale de véhicule A-A sur l'élément structurel (31) au niveau du palier principal sur le châssis (4), et **en ce que** le premier élément coulissant (18) est attaché à la première bielle (32) dans la zone au-dessus du point d'appui (L5), et **en ce que** le deuxième élément coulissant (18) est attaché à la bielle (34) au-dessous du point d'appui (L5).

2. Véhicule cabriolet selon la revendication 1, **caractérisé en ce que** les éléments d'appui présentent des glissières d'avance (19) et des glissières d'appui (20), les glissières d'avance (19) étant réalisées de manière conique en s'évasant du bas vers le haut, alors que les glissières d'appui (20) s'étendent verticalement dans la direction de hauteur de véhicule D-D.
